Europäisches Patentamt

European Patent Office

Office européen des brevets

(11) Veröffentlichungsnummer: **0 096 088**
**B1**

## EUROPÄISCHE PATENTSCHRIFT

(45) Veröffentlichungstag der Patentschrift: 02.03.88

(51) Int. Cl.⁴: **B 01 L 3/02**

(21) Anmeldenummer: **82104915.2**

(22) Anmeldetag: **04.06.82**

(54) **Flaschenaufsatzkolbenbürette.**

(43) Veröffentlichungstag der Anmeldung:
**21.12.83 Patentblatt 83/51**

(45) Bekanntmachung des Hinweises auf
die Patenterteilung:
**02.03.88 Patentblatt 88/09**

(84) Benannte Vertragsstaaten:
**AT BE CH DE FR GB IT LI NL SE**

(56) Entgegenhaltungen:
**DE-A-2 134 727**
**DE-A-2 343 687**
**DE-A-2 937 066**
**FR-A-2 277 332**

(73) Patentinhaber: **Rudolf Brand GmbH & Co.**
**Ferdinand-Friedrich-Strasse 4**
**D-6980 Wertheim/Main 1 (DE)**

(72) Erfinder: **Bernard, Toni**
**Hirtenhäuslein 20**
**D-6980 Wertheim 5 (DE)**
Erfinder: **Lachenmann, Rudolf, Dr.**
**Oberer Neuberg 13**
**D-6980 Wertheim (DE)**

(74) Vertreter: **Hafner, Dieter Dr. Dipl.-Phys.**
**Essenweinstrasse 4-6**
**D-8500 Nürnberg70 (DE)**

Courier Press, Leamington Spa, England.

EP 0 096 088 B1

**Beschreibung**

Die Erfindung betrifft eine Flaschenaufsatzkolbenbürette mit einem Zylinder-Kolben-Ventilsystem zur Aufgabe von Flüssigkeit aus einem Behälter, sowie Mittel zur Anzeige der jeweils abgegebenen Flüssigkeitsmenge.

Derartige Meßgeräte in Art einer manuell bedienbaren Kolbenbürette dienen in der Titrimetrie zur Bestimmung der unbekannten Menge eines gelösten Stoffes aus dem Verbrauch eines Reagenzes mit bekannter Konzentration.

Um eine zweckmäßige und wirtschaftliche Analysenarbeit zu gewährleisten wird damit von der Kolbenbürette eine schnelle und genaue Abgabe und Anzeige der verbrauchten Reagenzvolumenmenge gefordert, wobei auch die Bedienersicherheit berücksichtigt werden muß, da im allgemeinen ätzende Reagenzien dosiert werden.

Kolbenbüretten bestehen aus einem kalibrierten Zylinder, in dem ein Kolben hin- und herbewegt werden kann. Das eine Zylinderende ist flüssigkeitsdicht mit einem Ventilsystem verbunden, derart, daß bei der Bewegung des Kolbens in einer Richtung Flüssigkeit aus einem Vorratsgefäß angesaugt wird und nach Umschalten des Ventilsystems beim Bewegen des Kolbens in die andere Richtung die Flüssigkeit durch eine Ausstoßkanüle in ein Vorlagegefäß mit der unbekannten Lösung abgegeben wird.

Der Kolbenantrieb und die Ventilumschaltung können über ein manuell oder elektrisch angetriebenes System erfolgen. Die DE—A—21 34 727 beschreibt eine Mikrometerbürette, bei der eine Bürette bestehend aus Zylinder, Kolben und Ventilsystem auf einer Flasche montiert ist und ein mikrometerartiger Antrieb den Kolben bewegt.

An der Teilung des Mikrometers kann dann—in Form einer Analogdarstellung—das abgegebene Volumen abgelesen werden.

Es sind auch Mikrometerbüretten—allerdings in Form ventilloser Handgeräte—bekannt, bei denen der Mikrometerantrieb mit einem mechanischen Zählwerk verbunden ist, sodaß das abgegebene Volumen digital durch hintereinander angeordnete Zählräder dargestellt wird.

Nachteil dieser Mikrometerbürette ist, daß zur Erzielung einer guten Auflösung ein feingängiges Gewinde notwendig ist. Dies führt dazu, daß beim Abgeben und Aufnehmen jeweils viele Umdrehungen für einen vollen Kolbenhub gemacht werden müssen. Dies ist insbesondere beim Flüssigkeitsaufnahmen von großen Zeitnachteil.

Die analoge Anzeige führt zwingend zu einem subjektiven Ablesefehler—z.B. Parallaxe-, der Gefahr von Irritümern—häufig muß die Differenz zwischen zwei Werten abgelesen werden—und einem insgesamt hohen Zeitbedarf.

Die mechanisch digitale Anzeige hat den Nachteil, daß die Zahlen nur klein dargestellt werden können, die Nullsetzung in jeder Kolbenstellung mechanisch aufwendig ist und daß es nicht möglich ist, zwei Kolbenhübe zu addieren, wenn z.B. die mit dem ersten Hub abgegebene Menge nicht ausreicht.

Ein spezieller Nachteil des Gerätes nach der DE—A—21 34 727 ist, daß leicht zerbrechliche Glasteile, beispielsweise die Ausstoßkanüle mit eingebautem Ventil, aus der Kontur des Gerätes herausragen. Bei einem Bruch kann der Bediener gefährdet werden.

Aus FR—A—2 277 322 ist eine Kolbenbürette in Form eines Tischgerätes bekannt. Dieses Gerät besteht aus einem auf einen Tisch aufstellbaren Sockel, in den ein motorisch angetriebener Getriebezug mit einer impulsgebenden Vorrichtung eingebracht ist. Oben steht ein Glaszylinder heraus, in dem sich ein zahnstangenangetriebener Kolben bewegt. Die Flüssigkeitsabgabe erfolgt bei nach oben bewegten Kolben aus einem oben an dem Glaszylinder angeordneten Abgabetubus.

Es sind ferner aus der US—C—3 319 840 motorgetriebene Kolbenbüretten bekannt, bei denen als Antriebsmotor ein Schrittmotor verwendet wird und die elektrischen Impulse, die der Schrittmotor benötigt, auch einem digital-elektronischen Zähler zugeführt und so zur Anzeige des Abgegebenen Volumens verwendet werden.

Die DE—A—22 35 208 beschreibt eine motorgetriebene Dosiereinrichtung, bei der der bewegliche Teil—Kolben—mit einer Markierungseinrichtung verbunden ist und mit einer Reihe von Zonen mit abwechselnden optischen Eigenschaften starr gekoppelt ist. Eine photo-elektrische Abtastung erzeugt Ausgangssignale, die gezählt werden und deren Anzahl mit einer Vorgabe von der Mengenangabeeinrichtung verglichen wird.

Auch die DE—A—29 37 066 beschreibt eine Dosiervorrichtung, bei der der Kolbenhub mit einem optischen Weglängenmeßsystem gemessen wird, indem die erzeugten elektrischen Impulse von einem vorgegebenen Zählerstand, der dem gewählten Volumen entspricht, abgezogen werden und die Kolbenbewegung bei Zählerstand Null gestopt wird.

Der Motorantrieb erfordert grundsätzlich einen beträchtlichen mechanischen Aufwand, sodaß in vielen Fällen aus rein wirtschaftlichen Gründen ein derartiges Gerät nicht in Frage kommt. Der Motorantrieb läßt wegen der Begrenzung von Schrittmotor und Impulsgenerator kein beliebig breites Geschwindigkeitsintervall zu—gefordert wird aber sowohl eine extrem langsame Bewegung nahe am Äquivalenzpunkt (Umschlagpunkt)—wie, auch eine extrem schnelle Bewegung zum Füllen. Die direkte optische Wegmessung läßt ebenfalls sehr hohe Geschwindigkeiten nicht zu, da die notwendige Auflösung der Kolbenbewegung im Bereich 1/100 mm liegt, damit die Impulsbreiten sehr schmal und die Impulsraten sehr hoch liegen und bei weil bei hohen Geschwindigkeiten Impulse verlorengehen, d.h. falsche Volumen ermittelt werden.

Aufgabe der Erfindung ist es daher, eine Kolbenbürette zu schaffen, die einfach aufgebaut ist, einen großen Geschwindigkeitsbereich der Volumenabgabe überdeckt, das abgegebene Volumen mit hoher Genauigkeit unter Vermeidung subjektiver Ablesefehler anzeigt, eine hohe Arbeitsgeschwindigkeit ermöglicht, geringen Platzbedarf hat und keine leicht zerbrechlichen Glasteile als Kanülen etc. verwendet.

Diese Aufgabe wird nach der Erfindung bei einer Flaschenaufsatzkolbenbürette der eingangs beschriebenen Art im wesentlichen dadurch gelöst, daß der Kolben fest mit einem Gehäuse verbunden ist, das Gehäuse den Zylinder, in dem der Kolben gleitbar angeordnet ist, zumindest teilweise übergreift, ein Handantrieb zum Verschieben des Gehäuses mit Kolben gegenüber dem Zylinder vorgesehen ist, der Zylinder direkt in einem Ventilblock befestigt ist, der Ventilblock in sich integriert ein Ansaug- und eine Ausstoß-Ventil umfaßt und auf einen flaschenartigen Behälter befestigbar ist, Schaltmittel zue Erzeugung von Impulsen zur Anzeige der Relativbewegung des Gehäuses zum Zylinder, d.h. des abgegebenen Volumens, angeordnet sind sowie eine elektronische Digitalanzeige vorgesehen ist, die mit den Schaltmitteln, (Impulserzeugung 17) zusammenwirkt.

Die Erfindung läßt sich in verschiedenen Ausführungsformen realisieren. Gemäß einem erste, bevorzugten Ausführungsbeispiel der Erfindung besteht der Handantrieb aus einer Zahnstange und einem Ritzel, wobei das Ritzel über ein Getriebe mit einer Magnetscheibe verbunden ist und am Umfang der Magnetscheibe ein Reedschalter angeordnet ist und Magnetscheibe und Reedschalter als Impulserzeugungsmittel bezüglich der Relativverschiebung zwischen Gehäuse und Zylinder wirken.

Gemäß einem angewandten Ausführungsbeispiel ist der Handantrieb über ein Getriebe mit einem optischen oder induktiven Drehwinkelgeber zur Erzeugung der Anzeigeimpulse verbunden.

Gemäß einer noch weiteren Abwandlung der Erfindung sind am bewegten Gehäuse und am Zylinder oder mit diesen starr verbunden schräg zueinanderstehende, optische Gitter angeordnet, die bei Relativbewegung zwischen Gehäuse und Zylinder moiree-interferometrisch Anzeigeimpulse erzeugen.

Gemäß einem weiteren Ausführungsbeispiel der Erfindung ist mit dem Gehäuse ein Magnet und mit dem Zylinder ein magnetostriktiver Stab verbunden und ein Ultraschall-Impulsgeber vorgesehen zur Abgabe derr volumenproportionalen Impulszahlen aufgrund der Laufzeit der Ultraschallimpulse.

In noch weiterer Ausgestaltung der Erfindung ist mit dem Zylinder ein magnetisches Material und mit dem beweglichen Gehäuse ein Lesekopf verbunden, so daß die jeweilige Position des Gehäuses abgelesen wird.

In hoch weiterer Ausgestaltung der Erfindung können für den Handantrieb wahlweise lösbare Sperrmittel vorgesehen sein. Dadurch kann ein abgegebenes Volumen espeichert werden, während bie Lösen der Rücklaufsperre, nach Wieder-Füllen der Bürette automatisch das später abgegebene Volumen zur Anzeige addiert wird.

Besonders zweckmäßig ist es, wenn die Sperrmittel aus einem Klinkenrad und einer kippbar angeordneten, von einem Speicherschalter betätigbaren Klinke gebildet sind.

Da die erfindungsgemäße Kolbenbürette als Handgerät ausgebildet ist, est es zweckmäßig, wenn eine eingebaute Spannungsquelle als wiederaufladbare Batterie ausgebildet und zur Auflading ein Steckernetzgerät mit Kleinstecker vorgesehen ist.

Zur weiteren Erleichterung einer Titrierung ist es vorteilhaft, wenn Schaltmittel, z.B. Kodierschalter oder Tasten zur Eingabe und Verarbeitung eines Faktors für die dem Anzeigemittel zugeführten Impulse vorgesehen ist. Mit diesem Faktor wird die Impulszahl verarbeitet z.B. multipliziert so daß als Anzeige nicht das Volumen des verbrauchten Reagenzes sondern bereits die Menge des unbekannten, zu bestimmenden Stoffes angezeigt wird.

Weitere Einzelheiten, Vorteilen und Merkmale der Erfindung werden anhand der Zeichnung näher erläutert. Dabei zeigt:

Fig. 1 eine erfindungsgemäße Kolbenbürette von der Bedienerseite,

Fig. 2 ein bevorzugtes Ausführungsbeispiel in Seitenansicht, teilweise geschnitten,

Fig. 3 und 4 ein Ausführungsbeispiel der Impulserzeugung, und

Fig. 5 den Ventilblock.

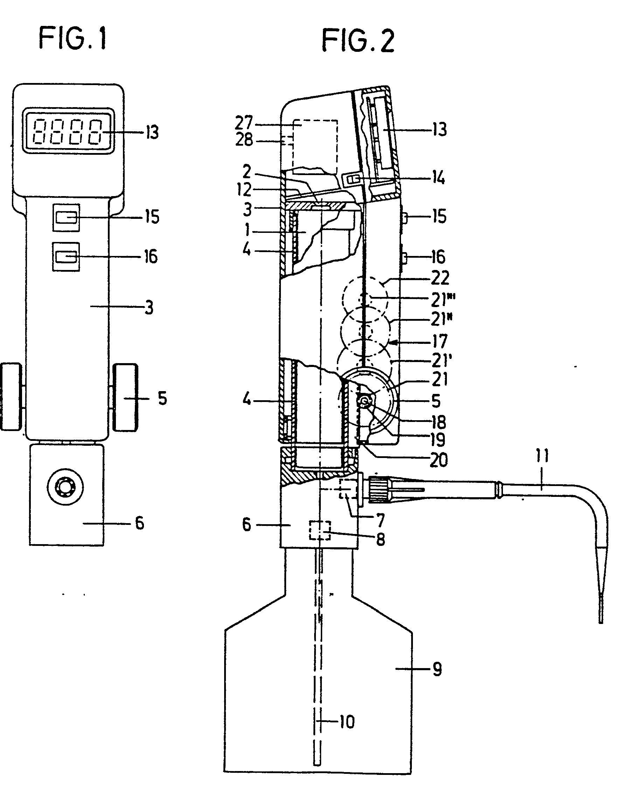

Eine erfindungsgemäße Kolbenbürette ist in Fig. 1 in Stirnansicht, d.h. von der Bedienerseite gesehen, dargestellt. Auf einem Ventilblock 6 ist ein Zylinder 4 fest befestigt, der von einem verschiebbaren Gehäuse 3 umschlossen wird. Zur Relativverschiebung dient eine Handhabe 5, die bei dem dargestellten Ausführungsbeispiel aus zwei Drehknöpfen besteht. Im oberen Teil ist eine Anzeigevorrichtung, vorzugsweise in Form einer elektronischen Digitalanzeige 13 angeordnet, Zur Betätigung des Gerätes dient ein Ein-Ausschalter 14. Mit Hilfe einer Nulltaste 15 wird, in später noch zu beschreibender Weise, die Anzeige 13 auf Null gestellt. Ein Speicherschalter 16 dient zur Speicherung der Anzeige abgegebenen Reagenzes aus einem Behälter (Flasche 9, Fig. 2) auf den das Gerät mit dem Ventilblock 6 befestigt, bevorzugt aufgeschraubt, werden kann.

Aus der teilweise geschnitten Seitenansicht der erfindungsgemäßen Kolbenbürette gemäß Fig. 2 geht der Aufbau deutlich hervor.

Im auf einen Behälter 9 aufgesetzten bzw. aufgeschaubten Ventilblock 6 ist ein Ansaugventil 8 angeordnet, welches über eine Ansaugkanüle 10 aus dem Behälter 9 bei Bedarf Flüssigkeit bzw. Reagenz anzusaugen ermöglicht. Im Gehäuse 3 ist mittels einer Schraube 2 ein Kolben 1 befestigt. Das Gehäuse 3 ist mit Hilfe eines Handantriebs 5, bestehend aus einer Welle 18 mit einem Ritzel 19, welches mit einer fest mit dem Zylinder 4 verbundenen Zahnstange 20 zusammenwirkt, angeordnet. Durch Drehen des Handantriebes 5 wird über die Welle 18 und Ritzel 19 das Gehäuse 3 mit Kolben 1 relativ zum Zylinder 4 bewegt. Zum Impulserzeugung dient eine Einrichtung 17, die aus einer Zahnradfolge 21, 21', 21'', besteht und eine Magnetscheibe 22 antreibt, die in der Folge durch die Welle 18 angetrieben wird. Der Kolben 1 kann im Zylinder 4 flüssigkeitsdicht, mit Hilfe des Handantriebes 5 hin- und herbewegt werden.

Zum Ausstoßen der jeweils benötigten Flüssigkeitsmenge dient ein im Ventilblock 6 angeordnetes Ausstoßventil 7, das mit einer Ausstoßkanüle 11 verbindbar ist.

Im Gehäuse 3 ist eine Impulserzeugung 17 vorgesehen, die in Abhängigkeit der Relativverschiebung von Gehäuse 3 mit Kolben 1 und Zylinder 4 elektronische Impulse erzeugt, die in einer elektronischen Schalteranordnung 12 verarbeitet und in der elektronischen Digitalanzeige 13 als abgegebenes Volumen angezeigt wird.

Mit der Nulltaste 15 kann der Zähler 13 und damit die elektronische Digitalanzeige in jeder Kolbenstellung auf Null gesetzt werden. Mit Hilfe des Speicherhalters 16 wird beim Drücken der jeweils in der elektronischen Digitalanzeige 13 angezeigte Wert festgehalten und nach dem Wiederlösen des Speicherschalters 16 werden weitere Impulse zu der jeweiligen Anzeige dazugezählt. Die Elektronik 12 ist vorzugsweise als Schaltungsplatte ausgebildet und im oberen Bereich des Gerätes angeordnet. Zur Stromversorgung dienen, vorzugsweise wieder aufladbare, Batterien 27 oder ein Akkumulator. Über einen Steckeranschluß 28 kann die Spannungsquelle über ein (nicht dargestelltes) Steckernetzgerät mit Kleinstecker versorgt werden. Dadurch ist auch ein unmittelbarer Netzbetrieb ermöglicht.

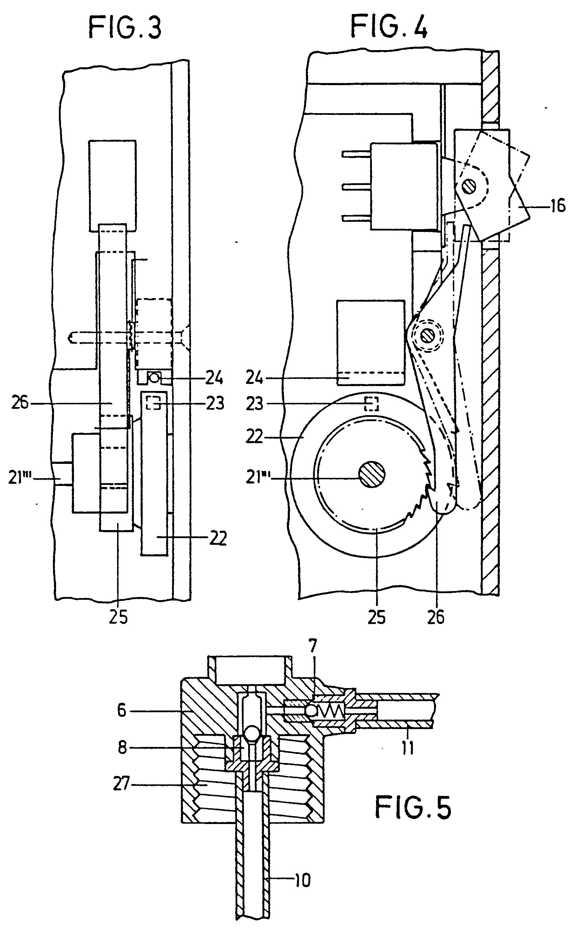

In den Fig. 3 und 4 ist ein Ausführungsbeispiel für eine Impulserzeugung dargestellt, bei dem durch das Zahnrad 21''' eine Magnetscheibe 22 mit gleicher Drehzahl mitgedreht wird. Die Magnetscheibe 22 enthält eine bestimmte Anzahl, vorzugsweise eingegossener, Magnete 23, z.B. zwanzig. Bei Drehung der Magnetscheibe 22 werden diese Magnete 23 an einem ortsfesten Reed-Schalter 24 vorbeigeführt. Bei jeder Vorbeidrehung eines Magneten 23 wird dieser Reed-Schalter 24 geschlossen und wieder geöffnet. Wird der Reed-Schalter 24 mit Spannung beaufschlagt, so wird bei jedem Vorbeidrehen eines Magneten 23 ein Stromimpuls erzeugt. Die Impulserzeugung kann aber auch derart erfolgen, daß anstelle der Magnetscheibe 22 in an sich bekannter Weise ein optischer oder induktiver Drehwinkelgeber verwendet wird. Dabei können auch die bekannten Techniken der Dreherichtungserkennung angewendet werden.

In Fig. 4 ist ferner dargestellt, wie in vorteilhafter Weise eine Rücklaufsperre gegen unbeabsichtigtes. Füllen mit dem Speicherschalter 16 gekoppelt werden kann. Ein Klinkenrad 25 ist dabei fest mit dem Zahnrad 21''' bzw. Magnetscheibe 22 verbunden. In die Zähne des Klinkenrades 25 greift eine Klinke 26 derart ein, daß sie durch Federdruck bei der Abwärtsbewegung in das Klinkenrad 25 eingreift, wobei der Drehsinn des Klinkenrades 25 bei Abwärtsbewegung derart ist, daß die Klinke 26 über die Zähne rutschen kann. Bei einer unbeabsichtigten Aufwärtsdrehung des Handabtriebes 5 sperrt die Klinke 26. Wird jedoch der Speicherschalter 16 betätigt, so rastet die Klinke 26 aus und ein Füllen, also eine Aufwärtsbewegung des Kolbens 1, ist wieder möglich. Bei erneuter Betätigung des Speicherschalters 16, also der Fortsetzung der Titration, rastet die Klinke 26 automatisch wieder in das Klinkenrad 25 ein.

In Fig. 5 ist der Ventilblock 6 dargestellt, der in an sich bekannter Weise Ansaugventil 8 und Ausstoßventil 7 umfaßt und beispielsweise mittels eines Gewindes 27 auf den Behälter 10 aufschraubbar ist. Ansaugventil 8 und Ausstoßventil 7 können auch in ebenfalls an sich bekannter Weise in Form eines handbetätigten Dreiwegehahnes oder in einer anderen Form ausgestaltet sein. Die Verschraubung des Ventilblockes 6 mit dem Behälter kann ebenfalls in an sich bekannter Weise mittels eines Überwurf-Adapters, Gewinde-Adaptern oder eines Schliff-Adapters erfolgen.

Gemäß einer Abwandlung der Impulserzeugung einer erfindungsgemäßen Kolbenbürette kann die Relativverschiebung vom Kolben 1 zu Zylinder 4 mittels der Moiree-Interferometrie verhältnismäßig leicht durchgeführt werden. Auf einem feststehenden Teil, z.B. auf dem Zylinder 4 selbst, befindet sich dabei ein Strichgitter. Auf dem bewegten Teil, z.B. einem Teil des Handantriebes 5 am Gehäuse 3 befindet sich ebenfalls ein in einem bestimmten Winkel dazu stehendes zweites Strichgitter. Dadurch, daß nur die optischen Interferenzen zur Impulserzeugung herangezogen werden, brauchen die Strichgitter selbst nicht mit sehr hoher Feinheit hergestellt zu werden.

Gemäß einem weiteren Ausführungsbeispiel der Erfindung dient zur Umsetzung der Relativ-Verschiebung von Kolben 1 zu Zylinder 4 in an sich bekannter Weise eine Vorrichtung, die die Laufzeitmessung eines Ultraschall-Impulses zur Impulserzeugung und damit zur Volumenanzeige verwendet. Dabei wird anstelle der Zahnstange 20 ein magnetostriktives Material fest mit dem Zylinder 4 verbunden. Mit dem Gehäuse 3 und dem Kolben 1 wird ein Magnet fest verbunden, der bei Relativ-Verschiebung des Gehäuses 3 bis zum Zylinder 4 an diesem magnetostriktiven Material entlang gleitet. Wird nun vom unteren oder oberen Ende des magnetostriktiven Materials ein Ultraschallimpuls eingeleitet, so wird dieser an der Stelle reflektiert, an der sich jeweils der Magnet befindet. Die Laufzeit kann dann über eine digital-elektronische Umwandlung zur Impulserzeugung und damit zur Volumenanzeige verwendet werden. In diesem Fall kann es zweckmäßig sein, die Elektronik 12 und die elektronische Digitalanzeige 13 nicht im beweglichen Gehäuse 3 sondern fest am Ventilblock 6 anzuordnen. Grundsätzlich hat Ort und Art der Unterbringung der Elektronik 12 und der elektronischen Digitalanzeige 13 keinen funktionalen Einfluß auf das erfindungsgemäße Gerät.

Eine weitere Möglichkeit, die Relativ-Verschiebung von Kolben 1 und Zylinder 4 zu bestimmen, besteht in der Verwendung eines lesbaren Informationsträgers, beispielsweise in der Art eines Magnetbandes oder Magnetstreifens, ähnlich wie er zur Programm-Speicherung bei Taschenrechnern verwendet wird. Diese Band wird starr mit dem Zylinder verbunden, und mit einer geeigneten Vorrichtung derartig magnetisiert, daß es in großer räumlicher Auflösung Informationen enthält, die entweder als reine Impulse gelesen werden können oder in kodierter Form die geometrische Lage auf dem Streifen angeben. Mit dem beweglichen Kolben ist dann ein Lesegerät in Art eines Magnetkopfes verbunden, das in der Lage ist, diese Informationen zu lesen und damit die jeweilige relative räumliche Lage von Kolben und Zylinder, d.h. die Stellung des Kolbens 1 im Zylinder 4, zu erkennen.

Eine weitere Ausgestaltung des erfindungsgemäßen Gerätes kann darin bestehen, daß eine digitale Eingabevorrichtung z.B. ein Kodierschalter oder ein Tastenfeld vorgesehen ist, mit der beispielsweise ein Faktor ("Titer") bezüglich des Reagenz (bzw. dessen Konzentration) in der Flasche eingegeben wird und die Elektronik 12 in der Lage ist, die aus der Impulserzeugung 11 stammende Information derart mathematisch zu verarbeiten, daß in der elektronischen Digitalanzeige 13 nicht das abgegebene Volumen erscheint, sondern bereits die aus dem Reagenzverbrauch ermittelte Menge des zu bestimmenden Stoffes.

Die Arbeitsweise des dargestellten Ausführungsbeispiels einer erfindungsgemäßen Kolbenbürette ist wie folgt:

Das Gerät wird mit seinem Ventilblock 6 auf einen mit Reagenz gefüllten Behälter (Flasche) 9 befestigt, insbesondere geschraubt. Durch entsprechendes Drehen des Handantriebes 5 wird das Gehäuse 3 zusammen mit dem Kolben 1 nach oben bewegt. Dazu wird das Ansaugventil 8 in die geöffnete Stellung gebracht, was beispielsweise durch Handbetätigung oder je nach Aufbau des Ventils 8 durch Flüssigkeitssteuerung erfolgen kann. Bei der Aufwärtsbewegung des Kolbens 1 wird durch die Ansaugkanüle 10 Reagenz aus dem Behälter 9 in den Zylinder 4 gezogen. Ist der Zylinder 4 am oberen Totpunkt (Umkehrpunkt) angelangt, wird der Handantrieb 5 kurz in die Richtung gedreht, die einer Abwärtsrichtung des Kolbens 1 entspricht. Dabei wird ein eventuelles mechanisches Umkehrspiel ausgeglichen. In dieser Stellung wird das Ansaugventil 8 geschlossen und das Ausstoßventil 7 geöffnet sowie die Null-Taste 15 gedrückt. Damit ist der Zylinder 4 mit Flüssigkeit (vollständig) gefüllt, der Kolben 1 befindet sich in einer oberen Stellung und in der elektronischen Digitalanzeige 13 wird "Null" angezeigt.

Nun wird der Handantrieb 5 derart betätigt, daß das Gehäuse 3 zusammen mit dem Kolben 1 nach unten bewegt wird.

Dabei wird das vorher angesaugte Reagenz durch die Ausstoßkanüle 11 abgegeben. Durch die Impulserzeugung 17 werden entsprechend der Relativ-Verschiebung des Kolbens 1 zum Zylinder 4 Impulse erzeugt, die über die Elektronik 12 in der elektronischen Digitalanzeige 13 als abgegebenes Volumen angezeigt werden. Durch den mechanischen Handabtrieb 5 ist der Bediener in der Lage, am Anfang der Titration große Flüssigkeitsmengen sehr schnell abzugeben und gegen Ende der Titration, wenn der Äquivalenzpunkt nahzu erreicht ist, die Flüssigkeit nur noch tropfenweise auszustoßen. Ist die Titration beendet, was durch Farbumschlag eines Indikators oder Meßwert eines pH-Meters angezeigt werden kann, liest der Bediener in der elektronischen Digitalanzeige 13 das abgegebene Volumen direkt in der Volumeneinheit (z.B. Milliliter) ab.

Richt die Flüssigkeitsmenge für eine weitere Titration aus, so wird wiederum die Null-Taste 15 gedrückt, der Kolben 1 weiter relativ zum Zylinder 4 nach unten bewegt und dabei die für die nächste Probe benötigte Flüssigkeitsmenge ausgestoßen. Nach Erreichen des Äquivalenzpunktes kann wiederum in der elektronisch Digitalanzeige 13 unmittelbar sofort und ohne Differenzbildung gegenüber einem früheren Wert das für die zweite Probe benötigte Volumen abgelesen werden.

Stellt der Bediener fest, daß er mit dem Kolben 1 den unteren Totpunkt erreicht hat und keine weitere Flüssigkeit mehr aus dem Zylinder 4 ausgestoßen werden kann, obwohl der Aquivalenzpunkt der vorgelegten unbekannten Probe noch nicht erreicht ist, so speichert er durch Drücken des Speicherschalters 16 den in der elektronischen Digitalanzeige 13 zu diesem Zeitpunkt angezeigten Wert. Mit dem Handantrieb 5 wird nun nach entsprechender Ventilschaltung der Kolben 1 wiederum nach oben bewegt und dabei wiederum Reagenzflüssigkeit aus dem Behälter 9 angesaugt. Nach Umschalten der Ventile 7, 8 in Ausstoßrichtung wird dann der Speicherschalter 16 gelöst und wiederum mit dem Handantrieb 5 der Kolben 1 erneut relativ zum Zylinder 4 nach unten bewegt und dabei weitere Reagenzflüssigkeit durch die Ausstoßkanüle 11 bis zum Äquivalenzpunkt der Probe ausgestoßen. Die bei dieser erneuten Abwärtsbewegung des Kolbens 1 in der Impulserzeugung 17 erzeugten Impulse werden den vor dem Drücken des Speicherschalters 16 in der elektronischen Digitalanzeige 13 befindlichen Impulsen zuaddiert. Damit wird am Ende unmittelbar das ingesamt ausgestoßende Volumen der Reagenzflüssigkeit direkt in der Volumeneinheit angezeigt.

Das erfindungsgemäße Gerät verfügt somit durch den Handantrieb 5 über eine Einrichtung, die ohne aufwendigen Motorantrieb und ohne Steuerung der abgegebenen Flüssigkeitsmenge in einen nahezu beliebig breiten Geschwindigkeitsbereich von sehr schneller Dosierung bis zu tropfenweiser Dosierung regelt. Durch das den Zylinder 4 übergreifende Gehäuse 3, das den Handantrieb 5 trägt, ist der Aufbaug außerordentlich einfach. Ferner wird dadurch der Zylinder 4 weitgehend geschützt, was insbesondere dann von Bedeutung ist, wenn der Zylinder 4 als Glaszylinder ausgebildet ist.

Durch die getrennte Impulserzeugung 17, die über ein mechanisches Getriebe erfolgen kann, ist es möglich, eine nahezu beliebig hohe Auflösung der Relativ-Bewegung von Kolben 1 und Zylinder 4 zu erreichen, ohne daß die dazu verwendeten Hilfsmittel aufwendig sein müssen oder die Gefahr besteht, daß Impulse verlorengehen. Die große elektronische Digitalanzeige 13, die direkt die Impulszahl als abgegebenes Flüssigkeitsvolumen anzeigt, vermeidet subjektive Ablesefehler. Die Null-Taste 15 ermöglicht es, den Titrationsvorgang in jeder Stellung des Kolbens 1 zu beginnen. Damit, insbesondere auch zusammen mit dem Speicherschalter 16 wird vermieden, daß nach jedem Titrationsvorgang das Gerät zunächst wieder vollständig mit Flüssigkeit gefüllt werden muß, indem der Kolben 1 wieder an seinen oberen Totpunkt bewegt werden muß oder daß zumindest der augenblickliche Stand notiert und nachbar durch Differenzbildung vom Endresultat abgezogen werden muß.

Durch die direkte Befestigung (z.B. Aufschrauben) des Ventilblockes 6, der aus einem Polyfluor-Kunststoff gefertigt ist und integriert Ansaug- und Ausstoßventil 7 bzw. 8 umfaßt, sowie durch die ebenfalls aus Fluor-Kunststoff gefertigte Ausstoßkanüle 11 werden bruchgefährdete Glasteile vermieden.

Das erfindungsgemäße Gerät bietet die Möglichkeit, Titrationen schnell und genau durchzuführen, wobei das Gerät gegenüber den bekannten Geräten wesentlich einfacher im Aufbau ist und somit eine sehr viel wirtschaftlichere und sowohl meßtechnisch wie auch bedienerseitig sichere Analysenarbeit ermöglicht wird.

Die Erfindung ist nicht auf das dargestellte Ausführungsbeispiel beschränkt. Sie umfaßt auch alle fachmännischen Abwandlungen und Weiterbildungen sowie Teil- und/oder Unterkombinationen der beschriebenen und/oder dargestellten Merkmale und Maßnahmen.

Bezugszeichenliste
1 Kolben
2 Schraube
3 Gehäuse
4 Zylinder
5 Handantrieb
6 Ventilblock
7 Ausstoßventil
8 Ansaugventil
9 Behälter (Flasche)
10 Ansaugkanüle
11 Ausstoßkanüle
12 Elektronik
13 elektronische Digitalanzeige
14 Ein-/Ausschalter
15 Nulltaste
16 Speicherschalter
17 Impulserzeugung
18 Welle
19 Ritzel
20 Zahnstange
21 Zahnrad
22 Magnetscheibe
23 Magnet
24 Reedschalter
25 Klinkenrad
26 Klinke
27 Batterie/Akkumulator
28 Anschluß für 27

**Patentansprüche**

1. Flaschenaufsatzkolbenbürette mit einem Zylinder-Kolben-Ventilsystem zur Abgabe von Flüssigkeit aus einem flaschenartigen Behälter, sowie Mittel zur Anzeige der jeweils abgegebenen Flüssigkeitsmenge,
dadurch gekennzeichnet, daß
der Kolben (1) fest mit einem Gehäuse (3) verbunden ist,
das Gehäuse (3) den Zylinder (4), in dem der Kolben (1) gleitbar angeordnet ist, zumindest teilweise übergreift,
ein Handantrieb (5) zum Verschieben des Gehäuses (3) mit Kolben (1) gegenüber dem Zylinder (4) vorgesehen ist,
der Zylinder (4) direkt in einem Ventilblock (6) befestigt ist,
der Ventilblock (6) in sich integriert ein Ansaug-(8) und eine Ausstoß-Ventil (7) umfaßt und auf dem flaschenartigen Behälter (9) befestigbar ist,
Schaltmittel zur Erzeugung von Impulsen zur Anzeige der Relativbewegung des Gehäuses (3) zum Zylinder (4) angeordnet sind, sowie
eine elektronische Digitalanzeige (13) vorgesehen ist, die mit den Schaltmittel (Impulserzeugung 17) zusammenwirkt.

2. Kolbenbürette nach Anspruch 1, dadurch gekennzeichnet, daß der Handantrieb (5) aus Zahnstange (20) und Ritzel (19) besteht.

3. Kolbenbürette nach Anspruch 2, dadurch gekennzeichnet, daß an dem Gehäuse (3) zwei Handbetätigungs-Drehknöpfe auf einer Welle (18) befestigt sind, die zechtwinklig zur Zahnstange (20) verläuft.

4. Kolbenbürette nach Anspruch 2 oder 3, dadurch gekennzeichnet, daß das Ritzel (19) über ein Getriebe (21, 21', 21'', 21''') mit einer Magnetscheibe (22) mit Magneten (23) verbunden ist, am Umfang der Magnetscheibe (22) ein Reedschalter (24) angeordnet ist, und Magnetscheibe (22) und Reedschalter (24) als Impulserzeugungsmittel bezüglich der Relativverschiebung zwischen Gehäuse (3) und Zylinder (4) wirken.

5. Kolbenbürette nach Anspruch 1, dadurch gekennzeichnet, daß der Handantrieb (5) über ein Getriebe mit einem optischen oder induktiven Drehwinkelgeber zur Erzeugung der Impulse verbunden ist.

6. Kolbenbürette nach Anspruch 1, dadurch gekennzeichnet, daß am bewegten Gehäuse (3) und am Zylinder (4) oder mit diesem starr verbunden schräg zueinanderstehende, optische Gitter angeordnet sind, die bei Relativbewegung zwischen Gehäuse (3) und Zylinder (4) moireeinterferometrische Anzeigeimpulse erzeugen.

7. Kolbenbürette nach Anspruch 1, dadurch gekennzeichnet, daß mit dem Gehäuse (3) ein Magnet und mit dem Zylinder (4) ein magnetostriktiver Stab verbunden und ein Ultraschall-Impulsgeber zur Abgabe von volumenproportionalen Impulszahlen aufgrund der Laufzeit der Ultraschallimpulse vorgesehen ist.

8. Kolbenbürette nach Anspruch 1, dadurch gekennzeichnet, daß mit dem Zylinder (4) ein magnetisierbares Material und mit dem beweglichen Gehäuse (3) ein Lesekopf verbunden ist.

9. Kolbenbürette nach Anspruch 1 oder folgenden, dadurch gekennzeichnet, daß für den Handantrieb (5) wahlweise lösbare Sperrmittel (25, 26) vorgesehen sind.

10. Kolbenbürette nach Anspruch 9, dadurch gekennzeichnet, daß die Sperrmittel aus einem Klinkenrad (25) und einem kippbar angeordneten, von einem Speicherschalter (16) betätigten Klinke (26) bestehen.

11. Kolbenbürette nach Anspruch 1 oder folgenden, dadurch gekennzeichnet, daß als Spannungsquelle (27) wiederaufladbare Batterien dienen und zur Aufladung ein Steckernetzgerät mit Kleinstecker vorgesehen ist.

12. Kolbenbürette nach Anspruch 1 oder folgenden, gekennzeichnet durch Schaltmittel (Kodierschalter, Tasten) zur Eingabe und Verarbeitung eines Faktors für die dem Anzeigemittel zugeführten Impulse.

13. Kolbenbürette nach einem der vorhergehenden Ansprüche, dadurch gekennzeichnet, daß durch Betätigung des Speicherschalters (16) der jeweils in der elektronischen Digitalanzeige (13) angezeigte Wert bei Relativbewegung zwischen Kolben und Zylinder abspeicherbar ist.

**Revendications**

1. Burette à piston montée sur un flacon, comprenant un système cylindre-piston-soupape pour débiter du liquide prélevé dans un réservoir en forme de flacon, ainsi que des moyens pour indiquer la quantité de liquide délivrée chaque fois, caractérisée en ce que le piston (1) est solidaire d'un boîtier (3), le boîtier (3) recouvre au moins en partie le cylindre (4) dans lequel le piston (1) est monté coulissant, une commande manuelle (5) est prévue pour déplacer le boîtier (3) avec le piston (1) par rapport au cylindre (4), le cylindre (4) est fixé directement à un bloc-soupapes (6), le bloc-soupapes (6), formant un ensemble intégré, comporte une soupape d'aspiration (8) et une soupape d'éjection (7) et est agencé de façon à pouvoir être fixé sur le réservoir (9) en forme de flacon, il est disposé un circuit propre à engendrer des impulsions en vue d'indiquer le mouvement relatif du boîtier (3), par rapport au cylindre (4), tandis qu'il est prévu un indicateur électronique numérique (13) qui coopère avec le circuit (générateur d'impulsions 17).

2. Burette à piston selon la revendication 1, caractérisée en ce que la commande manuelle (5) est constituée d'une crémaillère (20) et d'un pignon (19).

3. Burette à piston selon la revendication 2, caractérisée en ce que, sur le boîtier (3), deux boutons rotatifs de commande manuelle sont fixés sur un arbre (18) qui est disposé perpendiculairement à la crémaillère (20).

4. Burette à piston selon la revendication 2 ou 3, caractérisée en ce que le pignon (19) est relié par un engrenage (21, 21', 21'', 21''') à un disque magnétique (22) à aimants (23), un contacteur de Reed (24) est disposé sur le pourtour du disque magnétique (22), et le disque magnétique (22) et le contacteur de Reed (24) agissent en tant que moyen générateur d'impulsions en ce qui concerne le déplacement relatif entre le boîtier (3) et le cylindre (4).

5. Burette à piston selon la revendication 1, caractérisée en ce que la commande manuelle (5) est reliée par un engrenage à un émetteur d'angles de rotation, optique ou inductif, pour la génération des impulsions.

6. Burette à piston selon la revendication 1, caractérisée en ce que des grilles optiques, disposées obliquement l'une par rapport à l'autre, sont portées par le boîtier mobile (3) et par le cylindre (4), ou fixées rigidement à ceux-ci et, du fait du déplacement relatif entre le boîtier (3) et le cylindre (4), envoient des impulsions indicatrices interférométriques à moirage.

7. Burette à piston selon la revendication 1, caractérisée en ce qu'un aimant est fixé au boîtier (3) et un barreau magnétostricteur au cylindre (4) et l'on prévoit un émetteur d'impulsions ultrasoniques pour l'émission de nombres d'impulsions, proportionnels au volume, sur la base de la durée des impulsions ultrasoniques.

8. Burette à piston selon la revendication 1, caractérisée en ce qu'un matériau aimantable est relié au cylindre (4) et une tête de lecture au boîtier mobile (3).

9. Burette à piston selon la revendication 1 ou l'une des suivantes, caractérisée en ce que des moyens de verrouillage (25, 26), libérales à volonté, sont prévus pour la commande manuelle (5).

10. Burette à piston selon la revendication 9, caractérisée en ce que les moyens de verrouillage se composent d'une roue à rochet (25) et d'un cliquet (26) agencé de façon à pouvoir basculer et actionné par un interrupteur de mémoire (16).

11. Burette à piston selon la revendication 1 ou l'une des suivantes, caractérisé en ce que des batteries rechargeables servent de source de tension et qu'il est prévu une prise de secteur mâle à petites fiches, pour la charge.

12. Burette à piston selon la revendication 1 ou l'une des suivantes, caractérisée par des moyens de commutation (contacteurs de codage, touches) pour l'introduction et le traitement d'un facteur pour les impulsions envoyées aux moyens indicateurs.

13. Burette à piston selon l'une des revendications précédentes, caractérisée en ce que, par actionnement de l'interrupteur de mémoire (16), la valeur indiquée chaque fois dans l'indicateur numérique électronique (13) peut être effacée par le déplacement relatif entre le piston et le cylindre.

## Claims

1. Plunger type burette mounted on a flask with a cylinder-plunger-valve system for supplying fluid from a flask-type container and means of indicating the corresponding quantity of fluid which has been supplied, characterised in that the plunger (1) is connected rigidly to a casing (3), in that the casing (3) at least partially engages over the cylinder (4), in which the plunger (1) is arranged so that it can be slid, in that a hand drive (5) is provided for sliding the casing (3) with plunger (1) in relation to the cylinder (4), in that the cylinder (4) is fixed directly in a valve block (6), in that the valve block (6) includes incorporated in it a suction valve (8) and a delivery valve (7) and can be fixed to the flask-type container (9), in that switching means are arranged for generating pulses for indicating the relative movement of the casing (3) in relation to the cylinder (4) and in that an electronic digital display (13) is provided, which operates in conjunction with the switching devices (pulse generation 17).

2. Plunger type burette according to claim 1, characterised in that the hand drive (5) consists of a rack (20) and pinion (19).

3. Plunger type burette according to claim 2, characterised in that two control buttons for hand operation are fixed on a spindle (18) on the casing (3), whereby the spindle runs at right angles to the rack (20).

4. Plunger type burette according to claim 2 or 3, characterised in that the pinion (19) is connected to a magnet disk (22) with magnets (23) via gearing (21, 21', 21'', 21'''), in that a reed switch (24) is arranged at the periphery of the magnet disk (22) and in that the magnet disk (22) and reed switch (24) act as pulse generating means in relation to the relative movement between the casing (3) and the cylinder (4).

5. Plunger type burette according to claim 1, characterised in that the hand drive (5) is connected to an optical or inductive angle of rotation transmitter for generating the pulses.

6. Plunger type burette according to claim 1, characterised in that diffraction grids which are oblique to each other are arranged at the displaced casing (3) and at the cylinder (4) or are connected to the latter rigidly, whereby these grids generate moiree interferometer indicating pulses.

7. Plunger type burette according to claim 1, characterised in that a magnet is connected to the casing (3) and a magnetostrictive bar is connected to the cylinder (4) and in that an ultrasonic pulse transmitter is provided for transmitting numbers of pulses which are proportional to the volume on the basis of the transit time of the ultrasonic pulses.

8. Plunger-type burette according to claim 1, characterised in that a magnetizable material is connected to the cylinder (4) and a reading head is connected to the movable casing (3).

9. Plunger-type burette according to claim 1 or succeeding claims, characterised in that optionally detachable locking means (26, 26) are provided for the hand drive (5).

10. Plunger-type burette according to claim 9, characterised in that the locking means consist of a ratchet wheel (25) and a pawl (26), which is arranged so that it is tiltable and operated by a storage switch (16).

11. Plunger-type burette according to claim 1 or succeeding claims characterised in that rechargeable batteries are used as the voltage source (27) and that a plug mains appliance with a small plug is provided for charging.

12. Plunger-type burette according to claim 1 or succeeding claims characterised by switching means (coding switches, keys) for the entry and processing of a factor for the pulses fed to the indicating means.

13. Plunger type burette according to one of the preceding claims, characterised in that by operating the storage switch (16) the value given in each case in the electronic digital display (13) with the relative movement between the plunger and cylinder can be stored.

# FIG.1

# FIG.2

# FIG.3

# FIG.4

# FIG.5